# DEMANDE DE BREVET EUROPEEN

(11) **EP 1 264 964 A1**
(43) Date de publication de la demande: **11.12.2002**
(21) Numéro de dépôt: 02291392.5
(22) Date de dépôt: 06.06.2002
(51) Int. Cl.: F01D 5/06

(54) **Agencement de rotor de turbomachine à deux disques aubages séparés par une entretoise**

(30) Priorité: 07.06.2001 FR 0107413
(71) Demandeur: SNECMA MOTEURS, 75015 Paris (FR)
(72) Inventeur: Beutin, Bruno, 91100 Corbeil Essones (FR); Brault, Michel Gilbert Roland, 91800 Boussy Saint Antoine (FR); Gervais, Pascal, 77350 Boissise La Bertrand (FR); Guigli, Elisabeth, 91710 Vert Le Petit (FR); Thore, Monique, 91560 Crosne (FR)

(57) **Abrégé**

Une entretoise (36) est construite pour pouvoir être logée entre deux disques (31 et 32) solidaires d'un rotor, sans bride de boulonnage, et comprend des facettes de centrage (41), d'appui axial (43, 47) voire radial extérieur (45, 48). Elle comprend, outre une peau extérieure (37) favorable à l'étanchéité et à la création d'un circuit de ventilation, des languettes (38) de raidissage et favorisant l'appui.

## Description

L'invention est relative à un agencement de rotor de turbomachine, comprenant en particulier deux disques aubagés séparés par une entretoise affectée à la ventilation ou l'étanchéité.

Une construction classique des rotors comprend des disques successifs pourvus de brides amenées en contact mutuel et unies par boulonnage. Des entretoises circulaires entourent les brides. De l'air de ventilation des disques peut circuler sous ces entretoises, et leur surface externe peut porter des agencements d'étanchéité avec des aubes fixes du stator. Les entretoises sont usuellement boulonnées aux brides ; mais cette conception devient impossible si les disques sont conçus pour être fabriqués d'un seul bloc ou soudés, ce qui fait disparaître les brides.

L'invention est relative à un nouvel agencement de rotor comprenant deux disques consécutifs et une entretoise intermédiaire, qui convienne à des disques associés de façon indémontable et dont les brides boulonnées ont disparu, ce qui oblige à concevoir un autre mode de fixation de l'entretoise.

Dans la définition la plus générale de l'invention, l'entretoise comprend une peau englobant un des disques (qui est entaillé de rainures de logement de pieds d'aubes), des languettes aptes à coulisser dans les rainures, des faces internes d'appui radial sur des faces complémentaires établies sur un des disques, et des faces extrêmes opposées d'appui axial sur un des disques et sur un joint associé à l'autre des disques.

On verra plus loin comment cette entretoise satisfait aux exigences d'un montage rigide malgré l'absence de boulonnage sans que ses fonctions d'étanchéité soient compromises, et en améliorant même les possibilités de ventilation des disques. Un autre avantage essentiel qu'on obtient est la simplification de l'agencement, corrélée à une réduction de poids et probablement à une meilleure tenue, en raison de l'union des disques, de la suppression des boulons et d'une rectification favorable de la forme des pièces.

Dans certaines réalisations plus particulièrement favorables, les faces extrêmes d'appui radial sur un des disques sont situées sur les languettes ; il en est de même des faces internes d'appui radial ; et l'entretoise peut encore comprendre des faces externes d'appui radial sur les zones d'un des disques et sur le joint, pour compléter son montage.

D'autres aspects, caractéristiques et avantages de l'invention seront encore découverts au moyen des figures suivantes et de leur commentaire :
- la figure 1 est une vue d'une réalisation d'une forme de l'art antérieur relativement proche de l'invention,
- la figure 2 est une vue générale d'un agencement particulier conforme à l'invention,
- les figures 3 et 4 sont deux vues partielles de l'agencement en direction axiale à des instants successifs,
- et la figure 5 illustre les extrémités de jonction de l'entretoise aux disques.

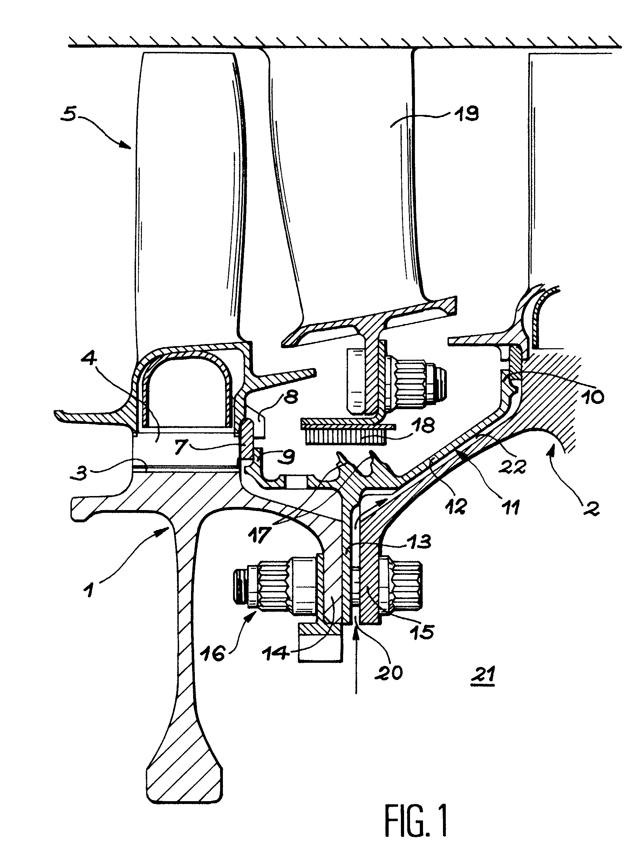

A la figure 1, deux disques 1 et 2 successifs d'un rotor comprennent chacun des rainures 3 axiales ou obliques dans lesquelles sont engagés des pieds 4 d'aubes 5. Les pieds 4 sont retenus dans les rainures 3 par leur section bulbeuse et, axialement, par un jonc 7 fendu retenu dans des crochets 8 des aubes 5 : en couvrant une partie du disque 1 ou 2, il retient les aubes 5 d'un côté ; et les mouvements opposés des aubes 5, qui repousseraient le jonc 7, sont arrêtés par une collerette 9 ou 10 à l'extrémité d'une entretoise 11 s'étendant entre les disques 1 et 2 et contre laquelle s'appuie le jonc 7. L'entretoise 11 comprend essentiellement une peau 12 reliant les collerettes 9 et 10 et une bride 13 s'étendant à mi-longueur de la peau 12 et sous elle ; la bride 13 est enserrée entre des brides 14 et 15 respectivement jointes aux disques 1 et 2 par des boulons 16. Enfin, on remarque que la peau 12 porte sur sa face externe une paire de léchettes 17, qui sont des crêtes circulaires aptes à venir s'enfoncer dans un anneau 18 de matière abradable attaché à l'extrémité d'un étage d'aubes fixes 19.

Les disques 1 et 2 peuvent être rafraîchis par une ventilation de gaz originaire d'une autre partie de la machine, mais un agencement particulier doit normalement être prévu pour chacun d'eux. La bride 13 de l'entretoise 11 peut ainsi être entaillée entre des paires de boulons 16 pour y dégager des lunules 20 permettant à du gaz de ventilation injecté dans une chambre 21 du rotor de s'introduire dans un canal annulaire 22 s'étendant entre la peau externe 12 de l'entretoise 11 et une virole de jonction de la bride 15 au disque 2 pour aboutir à celui-ci et l'attiédir avant de fuir en rejoignant l'écoulement principal dans la machine. Il est manifeste que la bride 13 contrarie une ventilation conjointe des disques 1 et 2.

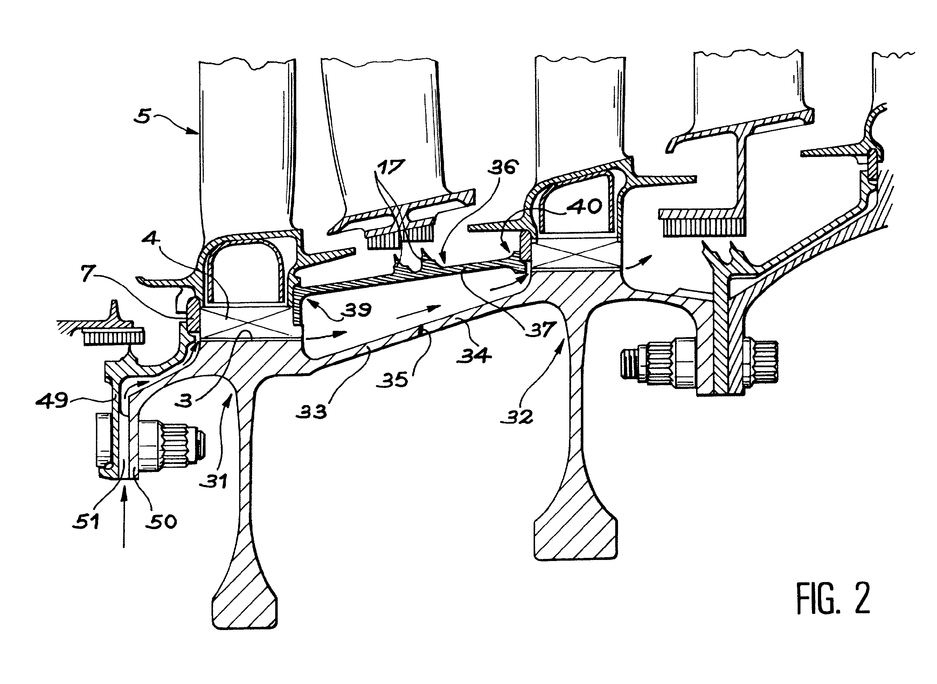

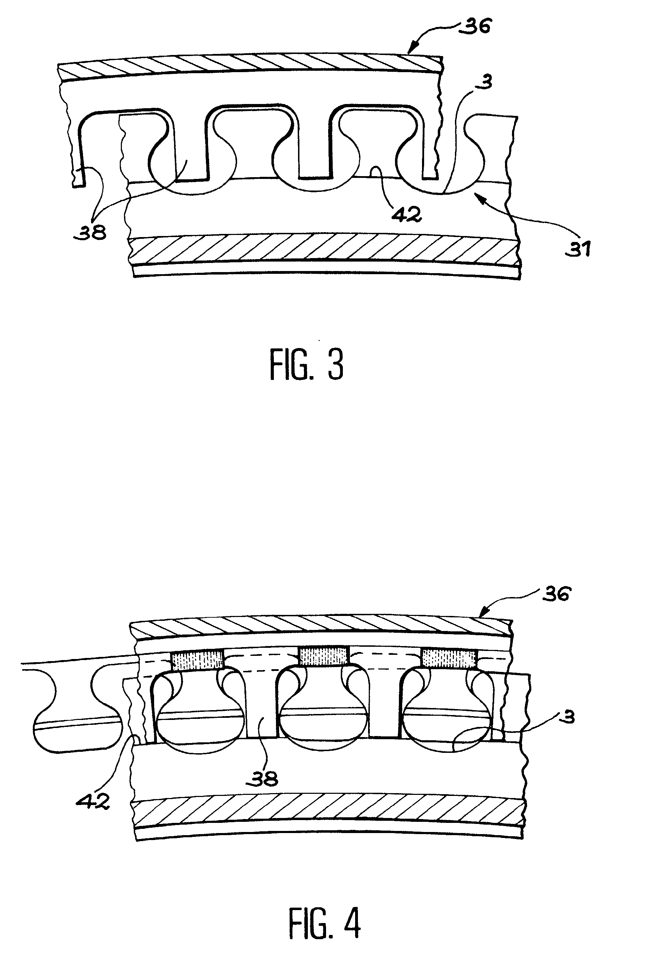

Se reportant à la figure 2, il apparaît que les disques 1 et 2 sont remplacés par des disques 31 et 32 unis directement par des viroles 33 et 34 soudées ensemble à un joint 35. Ici encore les disques 31 et 32 sont entaillés de rainures 3 destinés au logement de pieds 4 d'aubes 5. L'entretoise 11 est remplacée par une entretoise 36 dépourvue de bride d'attache et comprenant en particulier : une peau 37 extérieure dont le diamètre est toujours supérieur à celui du disque 31 le plus petit ; des languettes axiales 38, visibles aux figures 3 et 4, et dont le pas angulaire correspond à celui des rainures 3 du disque 31 ou à un multiple de ce pas ; et des portions extrêmes de butée 39 et 40 associées respectivement aux disques 31 et 32.

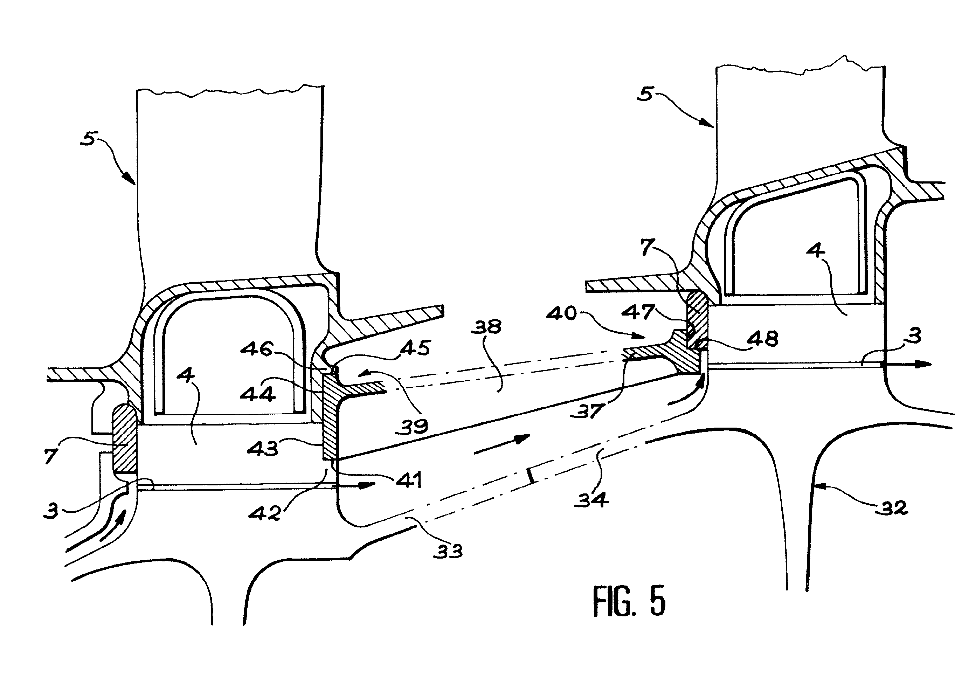

La première de ces portions de butée 39 comprend (reportez-vous à la figure 5), sur les languettes 38, des faces internes d'appui 41 sur des faces externes d'une couronne 42 ménagée sur le côté du disque 31, des faces axiales 43 d'appui butant contre le disque 31, et, sur la peau 37, une face axiale de butée 44 des aubes 5 et, une face externe d'appui 45 située sous des tablettes 46 saillant des aubes 5. L'autre des portions de butée 40 comprend une face axiale 47 et une face externe 48 d'appui toutes deux en contact avec le jonc 7 de rétention des aubes 5 du disque 32. On notera que les languettes 38, qui ne portent pas ces deux dernières faces, peuvent s'étendre depuis l'extrémité adjacente au disque 31 jusqu'à soit l'autre extrémité, soit une portion intermédiaire de l'entretoise 36, mais il est préférable qu'elle s'étendent aussi loin que possible pour former des canaux de ventilation complets, comme on l'évoquera plus loin.

L'appui des faces internes 41 contre la couronne 42 permet de centrer l'entretoise 36 sur le rotor ; les faces axiales 43 et 47 d'appui limitent les mouvements axiaux de l'entretoise 36 tout en offrant une souplesse suffisante grâce à l'intervention du jonc 7 ; enfin, les appuis radiaux externes sur les faces 45 et 48 ne sont pas indispensables, mais peuvent cependant contribuer à parfaire la cohésion de l'assemblage et à réduire les vibrations.

Le mode de montage consiste à assembler les aubes 5 au disque 32 en plaçant le jonc 7, puis à glisser l'entretoise 36 sur l'autre disque 31 en faisant passer les languettes 38 dans les rainures 3, ce qu'on illustre à la figure 3 ; puis l'entretoise 36 subit une rotation pour placer les languettes 38 devant des portions pleines du disque 31 entre les paires de rainures 3 conformément à la figure 4 ; il est alors possible d'installer les aubes 5 du disque 31 et de les mettre en place par un jonc 7 qui, contrairement à la conception précédente, est placé du côté opposé à l'entretoise 36.

L'entretoise 36, moins sollicitée thermiquement et mécaniquement que la précédente grâce à l'omission de la bride 13, pourrait avantageusement être construite en un matériau composite non métallique à base de carbone ; on pourrait alors faire une exception pour les léchettes 17, qui resteraient métalliques ainsi que les portions adjacentes de la peau 37.

L'entretoise 36 se prête à la ventilation successive des disques 31 et 32 par un même système, pouvant prendre l'aspect suivant (figure 2) : un flasque 49 est boulonné à une bride 50 du disque 31 à l'opposé de l'entretoise 36 pour retenir le jonc 7 ; il est traversé de lunules 51 pour l'entrée d'air de ventilation passant entre le flasque 49 et la bride 50 ; cet air passe ensuite dans les rainures 3, sous les pieds d'aubes 4, attiédissant le disque 31, avant de s'écouler sous la peau 37 dans l'entretoise 36 entre les languettes 38 ; puis il se dirige sans obstacle, canalisé par les languettes 38, jusqu'au disque 32 qu'il attiédit à son tour en traversant les rainures 3 sous les pieds d'aube 4.

La forme conique de la peau 37, dont on est redevable à l'abolition des brides boulonnées, est favorable à la tenue mécanique et approche les léchettes 17 des aubes du stator, ce qui permet de rendre plus mince le support de l'anneau abradable 18. Les languettes 38 ont l'effet supplémentaire de raidir l'entretoise 36.

## Revendications

1. Agencement de rotor de turbomachine comprenant deux disques (31, 32) aubagés et une entretoise (36), un des disques (31) au moins étant entaillé de rainures (3) de logement de pieds (4) d'aubes (5), où l'entretoise (36) comprend : une peau (37) englobant le disque rainuré (31) ; des languettes (38) aptes à coulisser dans les rainures (3) ; des faces internes d'appui radial (41) sur des faces complémentaires (42) établies sur un des disques (31), et des faces extrêmes (43, 47) d'appui axial, les faces internes d'appui radial (41) étant situées sur les languettes (38), **caractérisé en ce que** les facesextrêmes d'appui axial comprennent des premières faces (43), qui s'appuient sur un des disques, et des secondes faces (47), opposées aux premières faces (43), qui s'appuient sur un joint (7) associé à l'autre des disques.

2. Agencement de rotor de turbomachine selon la revendication 1, **caractérisé en ce que** les languettes et la peau délimitent des canaux de ventilation des disques, les canaux s'étendent aussi dans les rainures et sous les pieds des aubes ; et **en ce que**, les languettes (38) s'étendant entre les rainures (3), les premières faces extrêmes d'appui axial sont situées sur les languettes, et les faces complémentaires (42) sont situées sur une couronne ménagée sur le côté du premier disque (31).

3. Agencemenent de rotor selon l'une quelconque des renvendications 1 ou 2, **caractérisé en ce que** les disques s(31, 32) sont unis d'un seul tenant et l'entretoise (36) est circulaire.

4. Agencement de rotor de turbomachine selon l'une quelconque des revendications 1 à 3, **caractérisé en ce que** l'entretoise comporte des faces externes d'appui radial (45, 48) sur les aubes d'un des disques et sur le joint.

5. Agencement de rotor de turbomachine selon l'une quelconque des revendications 1 à 4, **caractérisé en ce que** l'entretoise est en matériau composite, hormis des léchettes d'étanchéité (17) frottant contre des anneaux (18) complémentaires de matière abradable.
